# EUROPEAN PATENT APPLICATION

(11) **EP 2 469 636 A1**
(43) Date of publication of application: **27.06.2012**
(21) Application number: 12158079.9
(22) Date of filing: 22.11.2006
(51) Int. Cl.: H01M 8/02, H01M 8/12, H01M 8/24

(54) **Electrochemical cell holder and stack**

(30) Priority: 23.11.2005 US 739229 P
(62) Divisional of application: 06838269.6
(71) Applicant: The Regents of The University of California, Oakland, CA 94607-5200 (US)
(72) Inventor: Jacobson, Craig P., Moraga, CA 94556 (US); Lu, Chun, Richland, VA 99354 (US); DeJohnghe, Lutgard C., Lafayette, CA 94549 (US)
(74) Representative: Dey, Michael

(57) **Abstract**

A fuel cell stack made of a plurality of cell units stacked and operatively connected at one end thereof. Each of the units includes a holder (20) having at least one cell, typically provided as an SOFC membrane, to produce an electric current when fuel and oxidant are present as the result of an electrochemical reaction. The holder (20) comprises a front and a back wall plate (22,23), at least a window-like opening (21) for accommodating the electro-chemical cell (24).

## Description

This application claims priority from U.S. Provisional Patent Application No. 60/739,229 filed November 23, 2005, which is hereby incorporated by reference in its entirety.

### STATEMENT OF GOVERNMENTAL SUPPORT

This invention was made during work supported by U.S. Department of Energy under Contract No. DE-AC03-76SF00098. The government has certain rights in this invention.

### BACKGROUND OF THE INVENTION

### FIELD OF THE INVENTION

The present invention relates to the field of electrochemical devices, and more specifically solid oxide fuel cells (SOFCs), electrolytic oxygen generators, and electrolyzers.

### BACKGROUND

Steadily increasing demand for power, increasing fuel costs, and the atmospheric build up of greenhouse and other combustion gases has spurred the development of alternative energy sources for the production of electricity. Fuel cells hold the promise of an efficient, low pollution and environmentally friendly technology for generating electricity from a wide variety of fuels. However, the present cost of electrical energy production from fuel cells is several times higher than the cost of the same electrical production from commercial technologies. The high cost of capitalization and operation per kilowatt of electricity produced has delayed the commercial introduction of fuel cell generation systems.

Solid oxide fuel cells offer the potential of high efficiency combined with fuel flexibility. Considerable progress is being made in raising the performance and therefore lowering the per unit cost of solid oxide fuel cells, and as an example, one of the present inventors was the first to demonstrate that power densities of as much as 2W/cm² could be obtained for supported thin-film yttria -stabilized zirconia (YSZ) solid oxide fuel cells, at 800°C, see S. de Souza, S.J. Visco, and L.C. De Jonghe, "Reduced-temperature solid oxide fuel cell based on YSZ thin-film electrolyte," J. Electrochem. Soc., 144, L35-L37 (1997), the contents of which are hereby incorporated in their entirety for all purposes. While this result was encouraging, further reductions in temperature to below 800°C would aid in lowering the system cost. Such reduction in operating temperature on the one hand makes the use of metallic interconnects and support electrodes possible, allowing for cost reduction, and on the other hand allows new ways of configuring fuel cells so that current can be collected with minimal resistive loss.

A conventional fuel cell is an electrochemical device that converts chemical energy from a chemical reaction with the fuel directly into electrical energy. Electricity is generated in a fuel cell through the electrochemical reaction that occurs between a fuel (typically hydrogen produced from partially oxidized or reformed hydrocarbons such as methanol, ethanol, propane, butane or methane) and an oxidant (typically oxygen in air). This net electrochemical reaction involves charge transfer steps that occur at the interface between the ionically-conductive electrolyte membrane, the electronically-conductive electrode and the vapor phase of the fuel or oxygen. Other types of fuel cells known in the prior art include molten carbonate fuel cells, phosphoric acid fuel cells, alkaline fuel cells, and proton exchange membrane fuel cells. Because fuel cells rely on electrochemical rather than thermomechanical processes in the conversion of fuel into electricity, the fuel cell is not limited by the Carnot efficiency experienced by conventional mechanical generators.

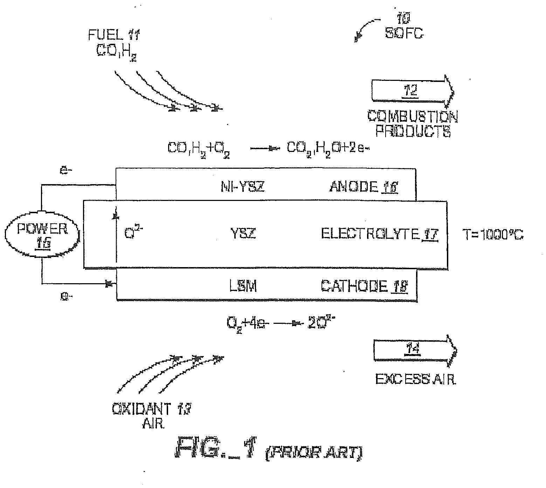

Solid oxide fuel cells are all solid devices that offer the potential of a high volumetric power density combined with fuel flexibility. FIG 1 illustrates a cross section of a fuel cell, in particular a solid oxide fuel cell (SOFC) (10). The cell consists of two electrodes, an anode (16) and a cathode (18) separated by an electrolyte (17). In this example, a nickel-yttria-stabilized zirconia cermet (Ni/YSZ) is the material used for the anode (16). Lanthanum strontium maganite (LSM) is the material used for the cathode (18) and yttria-stabilized zirconia (YSZ) is used for the electrolyte. Many other combinations of materials may be used to construct a SOFC. Fuel (11), such as H₂, CO, and/or CH₄ (the present invention may be used with other fuels) is supplied to the anode (16), where it is oxidized by oxygen ions (O²⁻) from the electrolyte (17), which releases electrons to the external circuit. On the cathode (18) an oxidant such as O₂ or air is fed to the cathode, where it supplies the oxygen ions from the electrolyte by accepting electrons from the external circuit. The electrolyte (17) conducts these ions between the electrodes, maintaining overall electrical charge balance. The flow of electrons in the external circuit provides power (15), which may be siphoned off from the external circuit for other uses. Reaction products (12) are exhausted off the device. Excess air (14) may be passed through the device.

In conventional SOFCs, the electrolytes are typically formed from ceramic materials, since ceramics are able to withstand the high temperatures at which the devices are operated. For example, SOFCs are conventionally operated at about 850°C to 1000°C. Also, typical solid state ionic devices such as SOFCs have a structural element on to which the SOFC is built. In conventional planar SOFCs the structural element is a thick (100-500µm) solid electrolyte plate such as yttria stabilized zirconia (YSZ); the porous electrodes are then screen printed onto the electrolyte.

In the case of a typical solid oxide fuel cell, the anode is exposed to fuel and the cathode is exposed to an oxidant in separate closed systems to avoid any mixing of the fuel and oxidants due to the exothermic reactions that can take place with hydrogen fuel.

The electrolyte membrane is normally composed of a ceramic oxygen ion conductor in solid oxide fuel cell applications. In other implementations, such as gas separation devices, the solid membrane may be composed of a mixed ionic electronic conducting material ("MIEC"). The porous anode may be a layer of a ceramic, a metal or, most commonly, a ceramic-metal composite ("cermet") that is in contact with the electrolyte membrane on the fuel side of the cell. The porous cathode is typically a layer of a mixed ionically and electronically-conductive (MIEC) metal oxide or a mixture of an electronically conductive metal oxide (or MIEC metal oxide) and an ionically conductive metal oxide.

Solid oxide fuel cells normally operate at temperatures between about 850°C and about 1000°C to maximize the ionic conductivity of the electrolyte membrane. At appropriate temperatures the oxygen ions easily migrate through the crystal lattice of the electrolyte. However, most metals are not stable at the high operating temperatures and oxidizing environment of conventional fuel cells and become converted to brittle metal oxides. Accordingly, solid-state electrochemical devices have conventionally been constructed of heat-tolerant ceramic materials. However, these materials tend to be expensive and still have a limited life due to their brittle nature. In addition, the materials used must have certain chemical, thermal and physical characteristics to avoid delamination due to thermal stresses, fuel or oxidant infiltration across the electrolyte and similar problems during the production and operation of the cells.

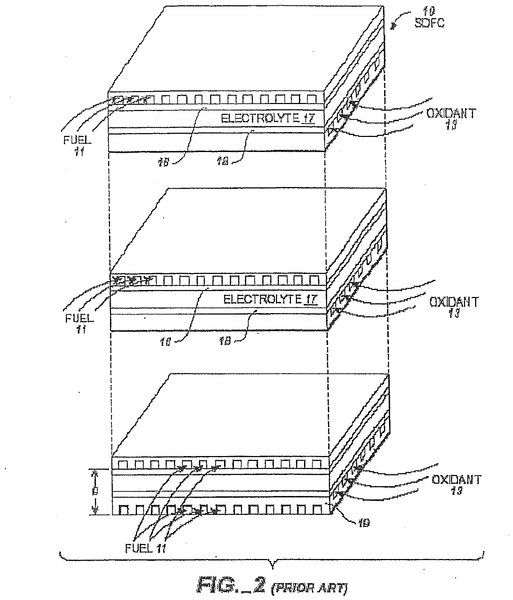

Since each SOFC generates a relatively small voltage, several SOFCs may be associated to increase the capacity of the system. Such arrays or stacks generally have a tubular or planar design. FIG 2 illustrates a basic planar design for a solid state electrochemical device, for example a solid oxide fuel cell (SOFC). The cell (10) includes an anode 16 (the "fuel (fuel 11) electrode") and a cathode (18) (the "air, (oxidant 13) electrode") and a solid electrolyte (17) separating the two electrodes. An interconnect (19) separates the fuel and the oxidant and electrically connects one cell to another in series. Typically a multitude of cells are "stacked" to make a "stack". In reality, there is no space between the stacks as shown in FIG 2 and one set of anode/electrolyte/cathode/interconnect is in contact with the next.

Planar designs, however, are generally recognized as having significant safety and reliability concerns due to the complexity of sealing of the units and manifolding a planar stack. As shown in FIG 2 the cells and interconnect are in contact with each other at various points. Such an assembly requires high flatness tolerances in order to avoid uneven contact pressure and inhomogeneous stress distribution. Inhomogeneous stress increases the risk of cell failure during assembly or operation. The high flatness tolerance of the cells increases the production cost. Also to avoid stress due to temperature gradients across the cell they must be heated and cooled very slowly. The slow heat up results in wasted fuel and a subsequent decrease in efficiency for applications requiring a large number of on/off cycles.

Conventional stacks of planar fuel cells operated at the higher temperature of approximately 850-1000°C have relatively thick electrolyte layers compared to the porous anode and cathode layers applied to either side of the electrolyte and provides structural support to the cell. However, in order to reduce the operating temperature to less than 800°C, the thickness of the electrolyte layer has been reduced from more than 50-500 microns to approximately 5-50 microns. The thin electrolyte layer in this configuration is not a load bearing layer. Rather, the relatively weak porous anode and cathode layers must bear the load for the cell. Stacks of planar fuel cells supported by weak anodes or cathodes may be prone to collapse under the load, e.g., during stack construction or thermal cycling. Reducing the mechanical stress of the cells helps avoid cell failure.

In addition, SOFC stacks should have a short startup time and possess stability during thermal cycling in certain applications, including auxiliary power unit (APU) and portable power applications. Available prior art stacks can tolerate ∼70°C/min heating procedure and it takes ∼10 minutes to reach 700°C, but the stack stability over rapid thermal cycling remains unknown.

Prior art planar stacks suffer from the fact that all four sides (if rectangular) are coupled to each other and the cell membrane and the cell membrane is coupled to the interconnect. A multitude of cells are stacked together and therefore all mechanically coupled. This arrangement induces thermal and mechanical stresses during operation that cause various failures within cells in the stack, decreasing performance and lifetime of the device. In one attempt to solve the problems of the prior art U.S. Published application no. 20030096147 A1, published May 22, 2003, the contents of which are hereby incorporated by reference in its entirety for all purposes, discloses solid oxide fuel cell assemblies having packet elements having an enclosed interior formed in part by one or more compliant solid oxide sheet sections with a plurality of anodes disposed within the enclosed interior.

### OBJECTS AND SUMMARY OF THE INVENTION

It is an object of the invention to provide an electrochemical cell holder and stack that alleviates chemical and mechanical stresses generally associated with available planar stacks; that demonstrate a relatively brief startup time, provide stability during thermal and mechanical shock, and exhibit improved electrochemical performance. It is also an object of the invention to provide improved cell units for use in the manufacture of cell stacks. It is also an object of the invention to provide a cell holder that can utilize cell membranes of lower flatness tolerances and thereby reduce cost.

These objects and others are achieved according to the present invention, which relates in part to a cell stack made of a plurality of cell units stacked and operatively connected. Each of the units includes a holder having at least one cell, typically provided as an SOFC membrane, to produce an electric current when fuel and oxidant are present as the result of an electrochemical reaction. The individual units forming the stacks are made of a cell membrane holder with one or more cell membranes mounted thereto. The cell membrane has an anode, a cathode, and an electrolyte, typically arranged between the anode and cathode.

The holder preferably includes an opening (window) for mounting the cell membrane, an electrical contacting portion adjacent to the anode, an electrically insulating portion to electronically isolate the cathode, and a gas outlet and/or inlet adjacent to the window.

The holders may be made of a single part, of two parts, or three or more.

In a preferred embodiment the holder is made of three parts, a front wall plate, a back wall plate, and a spacer positioned therebetween. At least one of the front and/or back wall plates has an opening therein (window) to which the cell membrane is mounted, preferably with the anode spaced apart but facing inward toward the opposite plate when the holder is assembled with the spacer positioned between the front and back plates. At least one of the front wall or back wall has a gas outlet and/or gas inlet for providing fuel, e.g., hydrogen gas, hydrocarbon gas, or reformed hydrocarbons, to the interior electrodes, typically the anodes. An oxygen generator only requires a gas outlet. The spacer also has a window that generally corresponds to the windows of the front and/or back wall plates and communicates with the fuel inlet and outlet so that fuel can reach and contact the inner electrodes and the electrochemical reaction can take place to generate electricity. The back wall plate, the front wall plate, and the spacer are aligned and physically connected, e.g., by welding, to form the holder. These components may be in electrically conductive contact with one another, but may not be.

A portion of the holder must be made of an electrically conductive material and must be in electric contact with the anodes of the cell membranes mounted on the front and/or back walls of the holder. In one embodiment the front and back wall plates are in electrically conductive contact with both the anodes and the spacer. In other embodiments, the front and back wall plates are not electrically conductive, or are made of an electrically conductive material coated with a non-conductive material on at least a portion thereof and an electrically conductive spacer is in contact with the anodes.

The outer electrodes of the cell membrane, typically the cathodes, face outwardly towards the environment such that they can be exposed to ambient air or another oxidant. These electrodes are electronically isolated from the anodes such that the only current flowing between the electrodes is predominately in the form of ions and through the electrolyte.

The electrolyte is positioned between the anode and cathode of the cell.

The cell membrane may be affixed to a receiving portion of the back or front wall proximate to the respective window by any suitable means, e.g., a sealant. The seal may be conductive or insulating, or layers of each may be provided. Each cell membrane may be affixed or adhered to the front and back plates using different adhesives. In another preferred embodiment, the holder includes a front and back wall having windows and fuel flow channels defined therein, but no spacer (two-part construction).

In another preferred embodiment, the holder is a single plate.

In preferred embodiments, the holder is made entirely of stainless steel but may be made of any suitable material fit for the intended purpose provided some portion is made of an electrically conductive material, and may also be annealed.

A particularly preferred embodiment relates to a holder for a cell stack assembly having an opening for mounting the cell membrane, and an electrical contacting portion for contacting an anode, wherein the gas manifold is positioned at a periphery of the holder which will be in electric contact with an another holder.

Two or more units, that is, an assembly made of the holder with at least one cell membrane mounted thereto, may be stacked to increase energy output by operatively connecting the two or more units to each other. The units, individual or stacked, will also preferably be electrically connected to an outer circuit through which electrons produced via electrochemical reaction at the electrodes will flow.

The stacks may be formed in any operative arrangement, and may optionally be arranged in a housing. A preferred embodiment is directed to a cell stack assembly made of a plurality of planar cell units, wherein each of the cell units include a cell holder and at least one cell that are electrically connected. The at least one cell comprises an anode, a cathode, and an electrolyte; and the plurality of cell units are connected at a portion of a periphery of the cell holder of each cell unit. In this embodiment, the plurality of cell units are electrically, mechanically and/or connected at a portion of a periphery of the cell holder of each cell unit.

### BRIEF DESCRIPTION OF THE DRAWINGS

FIG 1 shows a prior art solid oxide fuel cell (SOFC) operation diagram.

FIG 2 shows a prior art solid oxide fuel cell in planar arrangement consisting of multiple cells.

FIG 3A is a schematic of a cell holder in accordance with one embodiment of the present invention.

FIG 3B shows a cell mounted to a holder with a seal according to an embodiment of the present invention.

FIG 4A shows the components of a holder according to one embodiment of the present invention.

FIG 4B is a photograph of a front piece, spacer and end piece of a holder made of stainless steel prepared in accordance with one embodiment of the present invention.

FIG 5 is a photograph of a smaller (left) and a larger (right) chip cell holder in accordance with the present invention; the larger holder has gas flow directors (baffles) (99).

FIG 6A shows a cross section of a unit comprising two cells in accordance with one embodiment of the present invention.

FIG 6B shows a side view of the unit of FIG 6A.

FIG 6C shows a cross section of unit comprising two cells in accordance with another embodiment of the present invention.

FIG 7 depicts a cell attached to a holder by brazing.

FIG 8 depicts a cell attached to a holder by a ceramic, glass or glass ceramic cell on an end with an electronically conductive paste provided to provide electric contact between the holder and the cell.

FIG 9 depicts a cell attached to a holder similar to that shown in Fig 8 but providing a glass topcoat gastight seal.

FIG 10A is a photograph of an assembled unit in accordance with the invention with silver mesh.

FIG 10B is a photograph of an assembled unit in accordance with the invention with silver mesh and Ag lead wires.

FIG 11 is a performance curve for a unit prepared according to one embodiment of the present invention.

FIG 12 is a graph showing variation of open circuit voltage (OCV) for a unit in accordance with the invention.

FIG 13 is a graph showing the temperature variation and its changing rate during thermal shock treatment.

FIG 14 is a graph showing OCV measured at 708°C vs. the number of shock cycles for a chipcell in accordance with the present invention.

FIG 15 is a photograph of a two-unit (chipcell) butterfly stack in accordance with the present invention.

FIG 16 is a scanning electron micrograph (SEM) of a brazed joint of a holder with insulator in accordance with the present invention.

FIG 17 is a graph showing the variation of the OCV of a two-unit butterfly stack in accordance with the present invention.

FIG 18A shows gas flow in a solid oxide fuel cell stack based on a combination of units connected in one embodiment of the present invention.

FIG 18B is an alternative embodiment showing gas flow through several combined units connected in one embodiment of the invention.

FIG 19 shows a unit having a plurality of cells, in this case four cells, in accordance with one embodiment of the present invention.

FIG 20 shows a unit having a plurality of cells in accordance with one embodiment of the present invention.

FIG 21 depicts an embodiment of the invention with holes to accommodate bolts for stacking.

FIG 22 depicts a circular shaped embodiment of the invention.

FIG. 23 depicts an alternative circular shaped embodiment of the invention

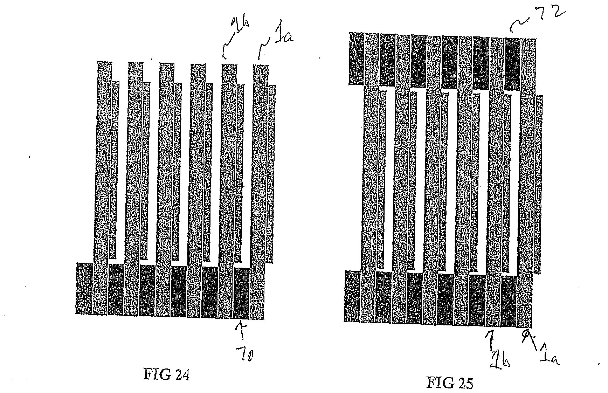

FIG 24 shows stacked units bonded with insulating material at one end.

FIG 25 shows stacked units bonded at two ends.

FIG 26 shows a butterfly stack arrangement of a combination of units in accordance with an embodiment of the present invention.

FIG 27 shows a ladder arrangement of units connected in one embodiment of the present invention.

FIG 28 shows a two-piece holder according to an embodiment of the present invention.

FIG 29 shows a one-piece holder according to an embodiment of the present invention.

### DETAILED DESCRIPTION OF THE PREFERRED EMBODIMENTS

By "cell" it is meant an electrochemical cell. In one embodiment of the present invention this means at least two electrodes with an electrolyte in between. This may also be termed "cell membrane" or "SOFC cell" herein.

By "holder" it is meant a structure that houses the cell and provide gas-flow paths and may or may not be electrically conductive.

By "unit" it is meant at least one "cell" or "cell membrane" in a holder in accordance with the invention. The term "unit" may include other structural elements such as housing, interconnect wires, pumps and other equipment for operation of fuel cell stacks. This may also be termed "chip" or "chipcell" herein.

By "stack" as it is used here it is meant a plurality of "units" connected, e.g., in a horizontal or vertical configuration. The electrical connections can be in series or parallel or a combination of series and parallel.

By "housing" it is meant some structure that encloses a unit or cell or stack. The term "housing" is used generically herein, and does not refer to one specific shape or structure but to those structures that enclose the cell, chip and/or unit. An "endwall" may be part of the housing or these terms may be used interchangeably.

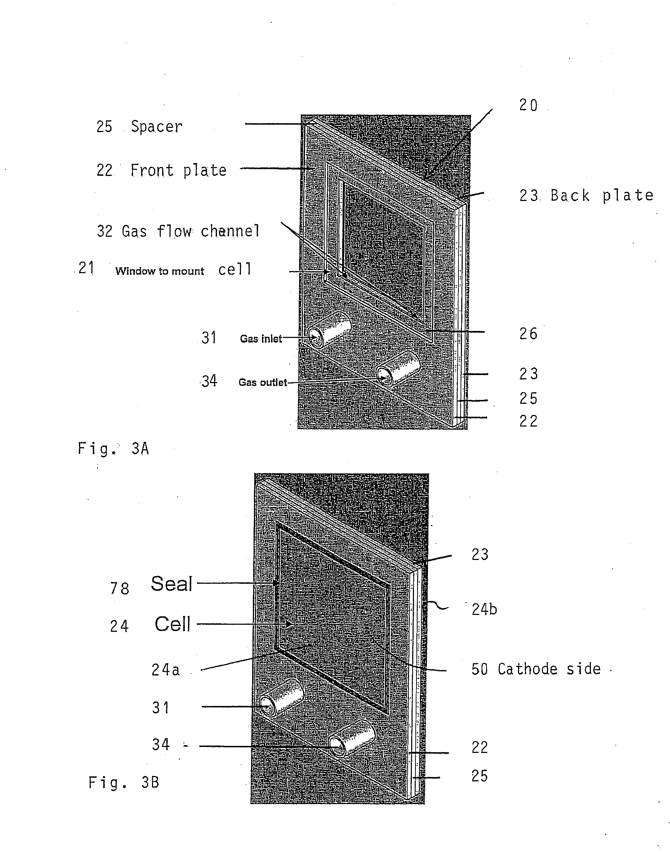

A preferred holder of the invention is illustrated in Fig. 3A. A window (21) or opening is provided in each front and back wall plates (22, 23) to accommodate a cell membrane (24), wherein the anodes preferably face each other in an inward direction but are spaced apart by a spacer (25) positioned between front and back wall plates (22, 23) which forms a fuel cavity (32) between electrodes, typically the anodes which serves as a fuel passageway, which may include a separate fuel passageway. This arrangement forms an anode chamber in the interior of the unit. Front and back wall plates (22, 23) may also have a receiving region (26) adjacent the window to which the cell membrane (24) may be affixed by a sealant.

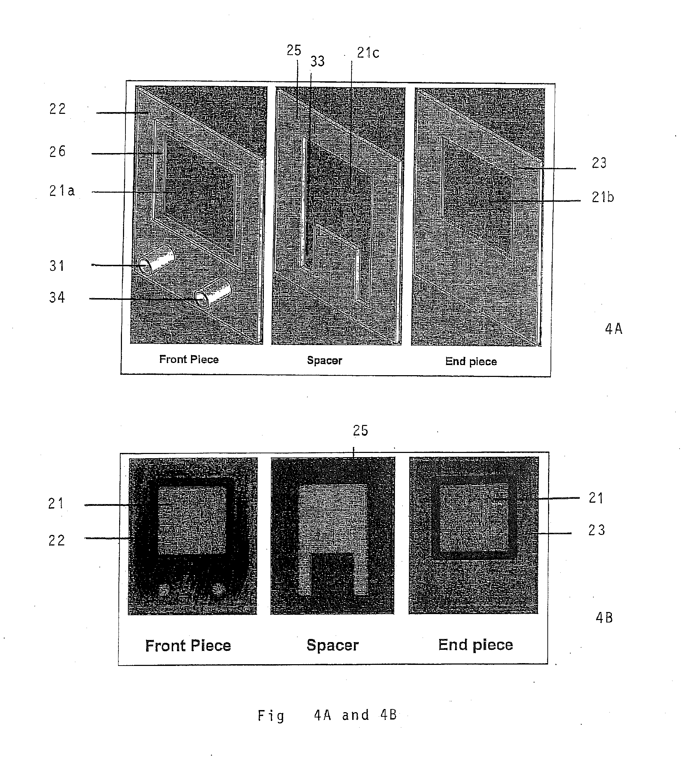

Referring to Figs. 3A and 4A, it can be seen that spacer (25) has a cutout window (21 c) therein generally corresponding to the windows (21a, 21b) of the front and back wall plates (22, 23), such that the anodes face each other but are spaced apart with a fuel cavity therebetween. Spacer (25) can be electrically conductive and in electric contact with each of the anodes (30) of the cell membranes. In Fig. 3B, the anodes (30) are electrically contacted with the front and back walls (22, 23), which in turn are in electric contact with the spacer (25). Thus, the anodes (30) are indirectly in electric contact with spacer (25). Alternatively, front and back walls (22, 23) may be electrically insulated from the anodes and spacer (25), in which case the anode is in direct electrical contact only with spacer (25) of the holder.

Fuel may pass through fuel cavity (32) and, if provided, the fuel passageway during operation of the device. It is understood that in accordance with one embodiment of the present invention fuel cavity (32) is sealed to the outside atmosphere and the only material in communication with the anodes (30) is the fuel that is provided. In one embodiment, fuel cavity (32) includes a fuel passageway that comprises tubing or other conduit means for supplying fuel to the anodes (30). The fuel passageway must have means of contacting the fuel with the anodes (30). Note that each cell membrane (24) is positioned adjacent to one another such that electrodes of one type, e.g. the anodes (30) are facing inward toward one another and electrodes of the other type are each facing outward, cathodes (50). Layered on the outside of each anode (30a) and (30b) is an electrolyte (60) and (62) respectfully. Layered on electrolyte (60) is a cathode (50).

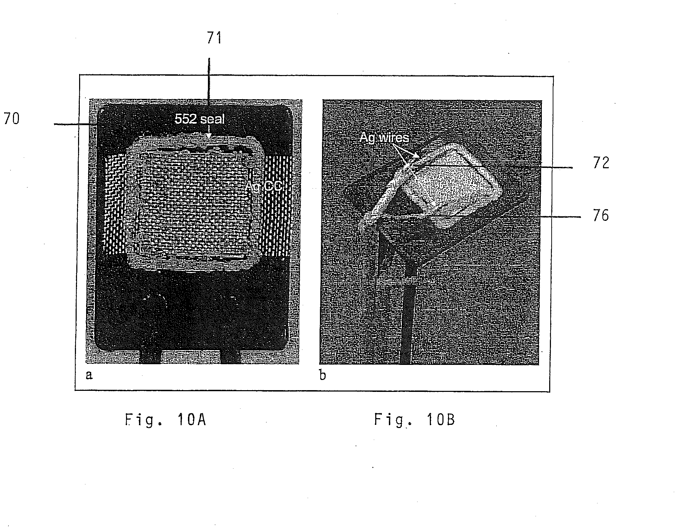

A current collector (70) such as a stainless steel or silver mesh, conductive paste, or porous alloy sheet is preferably in electric contact with the cathode (50) as shown in Fig. 10B. The current collector may be affixed to the cathode with a suitable material (71) or mechanical fastener, which is preferably electrically conductive. The current collector may be affixed to the cell and/or holder with an electrically insulating adhesive as shown in Fig. 10A. Lead wires (72, 76) may be provided as the current collector attached to the current collectors as shown in Fig. 10B. In some embodiments the current collector is the same material as the leads or wires or interconnect (72) and (76), e.g., silver. In other embodiments the current collector may be a silver paste and the leads, wires or interconnects (72) and (76) would then comprise a wire or mesh or other material suitable for electrical use. Any suitable materials may be used for the lead wires, current collector and seals or fastener. For example, coated metal screens are also suitable. US Patent No. 6,740,441 describes a coated current collection device capable of collecting current in an electrochemical cell comprising a coated metal screen, mesh or felt.

The invention contemplates that a multitude of units may be electrically connected. It is understood that the shape of the connectors is only one embodiment and any connector will be suitable so long as the proper current flow path is preserved.

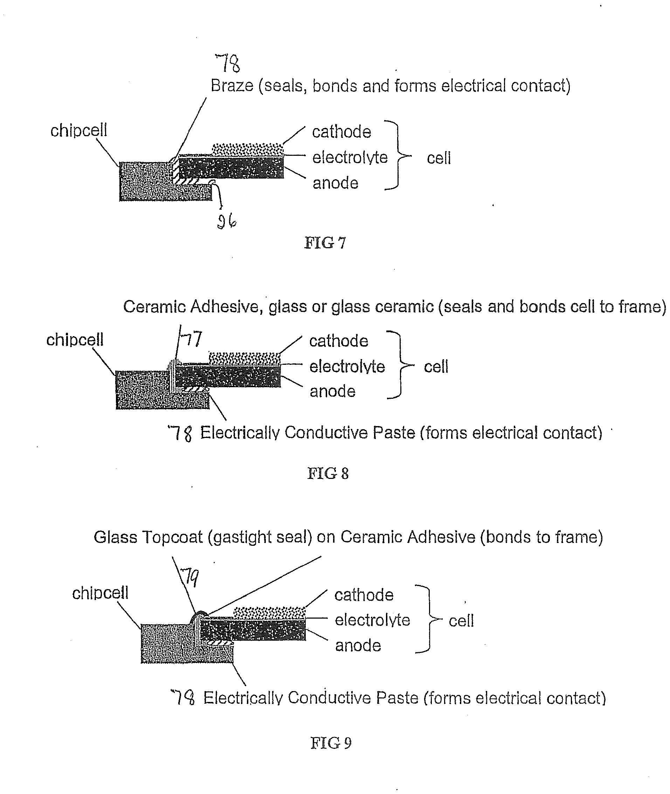

Cells may be mounted in the holder receiving region in the vicinity of the window (21) of the front and back walls (22, 23) using an electrically conductive seal (78) or a combination of conductive and insulating seals (77) as shown in Figure 7 to 9. The seal (71) has at least three functions. A first function is to seal the external atmosphere (typically air) from the internal atmosphere (typically H₂ + H₂O or reformed hydrocarbon gas mixture). A second function is to bond the cell to the holder. The third function is to- form an electrical contact between the anode and the holder. The third function may also be replaced by forming an electrical contact between the gas flow channels and the cell membrane. Three possible seals are shown in Figs. 7-9; these are examples and not meant to be limiting.

Referring to Figures 3A and 3B, fuel, typically hydrogen containing gas, is fed through a fuel inlet (31) in a front or back wall (22, 23) of holder (20), and is received into the fuel cavity (32) between anodes (30) via fuel receiving means in spacer (25) which communicate with fuel inlet (31) via communication region (33). The fuel then undergoes electrochemical oxidation on the inwardly facing anodes (30) before exhausting out via exhaust outlet (34) provided in the front or back wall (22, 23) of the holder 20. Fuel inlet (31) and exhaust outlet (34) may be positioned in any variety of ways provided they provide the necessary flow of fuel and properly exhaust spent fuel or any byproducts.

Holder (20) is preferably made of stainless steel as shown in Fig. 4B, but ceramics, alloys, and composites may also be used to form the holder. Stainless steel is particularly preferred and is electrically conductive. Typical alloys for use in accordance with the invention include ferritic steel with Cr contents between 12-30 wt% such as AISI 410L, 430L, 434L, 446, and Ebrite®, but these are exemplary and not limiting. Nickel based alloys are well known in the art and can also be used.

Spacer (25) is preferably made of an electrically conductive material, but the front and back walls may be electrically conductive or non-conductive or form an electronically insulating layer such as Al₂O₃ that forms on Al containing alloys such as FeCrAlY.

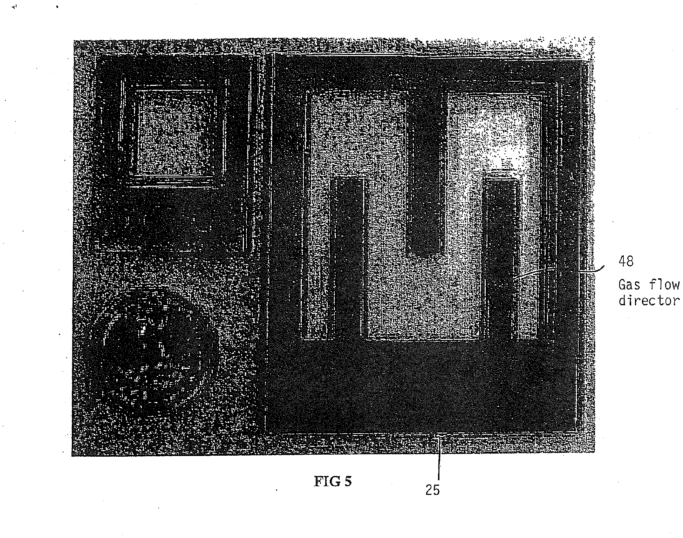

As shown in Fig. 5, the holder may have projections (48) or other flow directing portions to direct or control the flow of fuel as it travels through fuel passageway (32).

It is known in the art that coating the stainless steel can reduce the oxidation rate and decrease the chromium vaporization in moist air (see, for example, "Protective coating on stainless steel interconnect for SOFCs: oxidation kinetics and electrical properties" in Solid State Ionics, Volume 176, Issues 5-6, 14 February 2005, Pages 425-433 by Xuan Chen, Peggy Y. Hou, Craig P. Jacobson, Steven J. Visco and Lutgard C. De Jonghe). Such coatings are contemplated for the chipcell holder described herein.

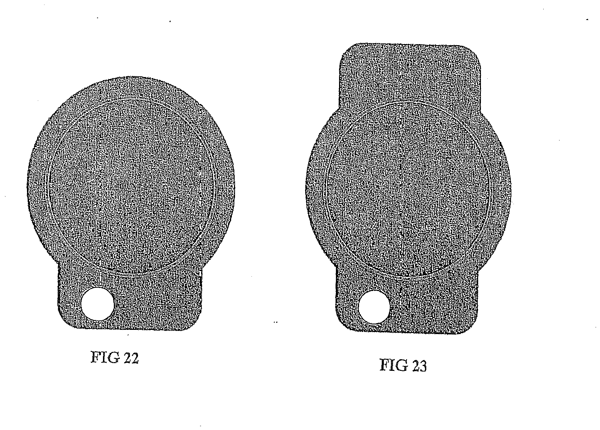

The dimensions of the holder may vary with the desired application and the shape of the window frame may be of any suitable shape a square or rectangular shape is shown in Figure 3A, and circular embodiments are depicted in Figures 22 and 23.

Holder (20) can be manufactured through any viable techniques such as extrusion, molding, casting, machining, stamping, punching, sintering, brazing, bonding or any combination of these or other methods known in the art, and typically will depend on the material chosen to make the holder. The front wall (22), back wall (23) and spacer (25) are positioned such that the windows and any fuel inlets (31) or outlets (34) are functionally aligned, and are physically connected by any means known in the art, e.g., by welding. Three parts are shown in Fig. 4A and 4B, however fewer or more parts may be used to construct the holder.

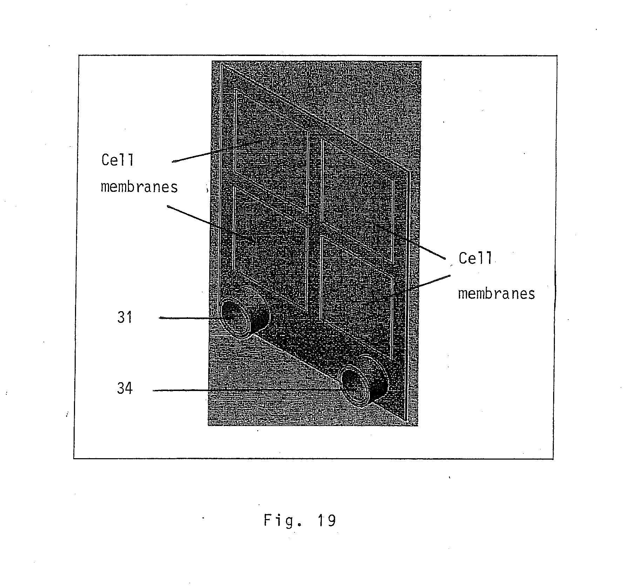

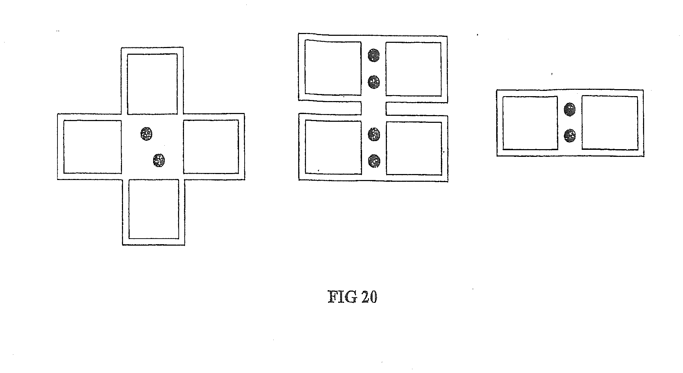

Any number of even and odd numbers of membranes may be used on each side of the unit. It is preferred that the number of the cell membranes on each side of the unit is the same, and a plurality of cells may be provided in respective windows, as shown in Fig. 19-20. In Fig. 19 and Fig 20 it can be see that the holder components have windows therein to receive a plurality of the SOFC cells, and any number of cells may be provided.

Any suitable cell membrane, whether specially manufactured or commercially available, may be used in accordance with the present invention. Selection of the cell will depend on a number of factors known to those skilled in the art; e.g., certain cathode, anode or electrolyte combinations may be preferred in certain applications over others. While not wishing to be bound by any particular theory or principle, operation of a SOFC in one embodiment of the invention proceeds as follows. An oxidant, preferably air which provides O₂ is supplied. Fuel, preferably partially oxidized or reformed hydrocarbons is supplied to be in contact with the anode through a fuel channel. Electrons supplied to the cathode will reduce the oxygen to O²⁻ (O₂+ 4 e- → 2O²⁻). Oxygen ions will be ionically transported across each electrolyte to the anode. When the oxygen ions reach the fuel at the anode they oxidize the hydrogen to H₂O and the CO to CO₂. In doing so they release electrons, and if the anode and cathode are connected to an external circuit this flow of electrons is seen as a dc current. Electric power is drawn from the unit or stacked unit. This process continues as long as fuel and air are supplied to the cell.

Electrochemical devices such as fuel cells, electrolytic oxygen generators, and electrolyzers have an electrolyte with and anode on one side and a cathode on the opposite side. The cells may be electrolyte supported where the mechanical strength of the cell is due to an electrolyte between 50-1000 µm thick. Thin film electrolytes (<50 microns thick) require a support that is usually the anode (for example Ni-YSZ) or cathode (such as LSM). Metal or cermet support structures such as described in U.S. Patent No. 6,605,316 can also be used. The chipcell design of the present invention can utilize any of these cells. Well known electrolytes include: yttria stabilized zirconia (YSZ) with 3 mol%, 8 mol% or 10 mol% yttria; scandia stabilized zirconia (SSZ); doped ceria such as gadolinia or samaria doped ceria (GDC or SDC); and doped lanthanum gallate such as strontium and magnesium doped lanthanum gallate (LSGM). These are merely examples and the invention is not so limited.

The electrodes in accordance with the present invention may comprise any suitable materials, e.g., a porous ferritic stainless steel, (for example in Steven J. Visco, Craig P. Jacobson, Igor Villareal, Andy Leming, Yuriy Matus and Lutgard C. De Jonghe, "Development of Low-Cost Alloy Supported SOFCs", Proc. ECS meeting, Paris, May 2003, the content of which are hereby incorporated by reference in its entirety for all purposes) about 0.4 mm thick, activated by incorporation of a Ni/ceria dispersion such as described in U.S. Patent No. 6,682,842. Additionally, stable increased catalytic activity may be obtained by post-infiltration with compounds that form nano-scale catalyst particles near or at the electrolyte/electrode interface, as in Keiji Yamahara, Craig P. Jacobson, Steven J. Visco, Lutgard C. De Jonghe, "High-Performance Thin Film SOFCs for Reduced Temperature", Proceedings SSI 14, Monterey, CA, 2003, the contents of which are hereby incorporated by reference in their entirety for all purposes. The ferritic steels have thermal expansion coefficients that can approximately match those of the ceramic electrolyte, thereby avoiding thermal stresses and allowing for high heating rates and thermal cycling. The cathode current collection may be facilitated by a supporting stainless steel mesh or Ag mesh that is incorporated with the cathode. The supported thin film electrolyte may be produced by colloidal processing and co-firing as disclosed in U.S. Patent No. 6,458,170. Materials for the electrolyte and electrodes are known in the art, and these and others yet to be discovered may be used in accordance with the present invention. Preferred are solid electrolytes include samaria-doped ceria (SDC), gadolinia doped ceria (GDC), yttria stabilized zirconia (YSZ), scandia stabilized zirconia, and La_{0.9}Sr_{0.1}Ga_{0.8}Mg_{0.2}0_{3-δ} (LSGM). Previous work by the present inventors has demonstrated obtainable area specific power in excess of 500mW/cm² between 600 and 650°C, for a cell membrane with a Lanthanum-Strontium-Cobalt-Nickel oxide (LSCN)/samaria-doped ceria(SDC) composite cathode, and a Ni/SDC composite anode (C.P. Jacobson, S. J. Visco,and L. C. De Jonghe, "Thin-Fihn Solid Oxide Fuel Cells for Intermediate Temperature (500-800°C) Operation", Proc. Of the Processing and Characterization of Electrochemical Materials and Devices, April 25-28, 1999, The American Ceramic Society).

The present invention contemplates that a plurality of units (1) may be coupled via a connector to create a stack of units. The construction of the unit and the stack minimizes stress transfer to the cells. The stacked units are operatively connected to one another so that fuel, oxidant, and any exhaust gases may flow as required to operate the cell. The units are also typically electrically connected to each other and to a collector circuit through which electrons produced during electrochemical processes in the device may flow and used for other applications.

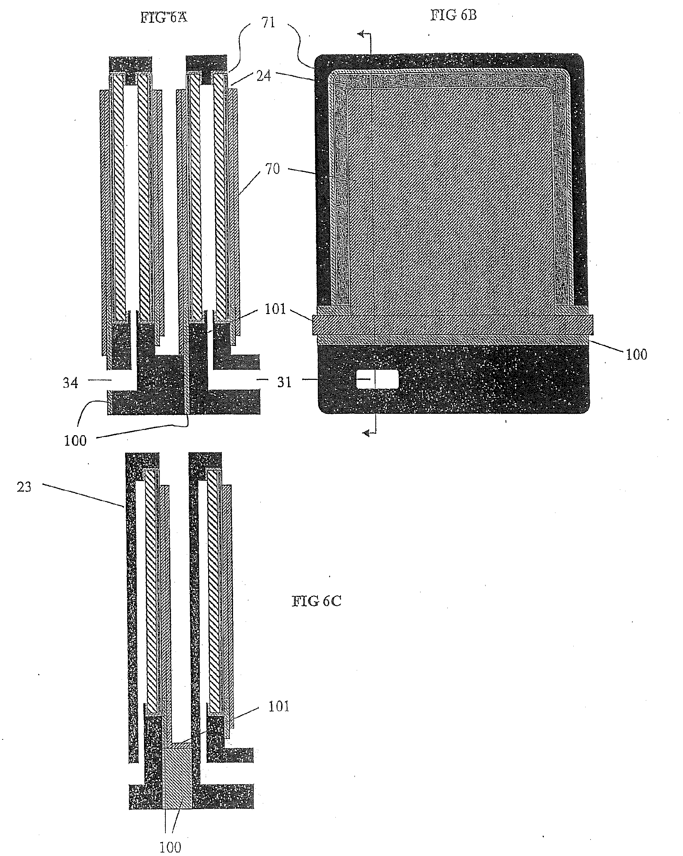

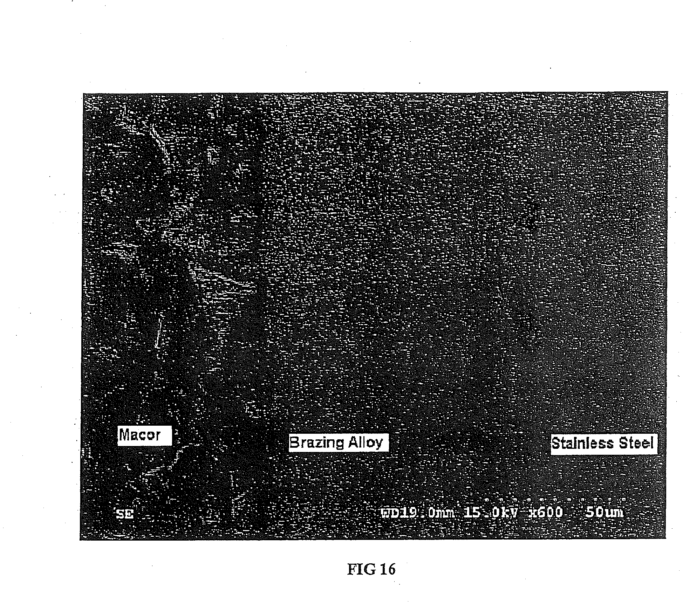

Current flows to the cathode as electrons, then through the electrolyte as ions, and then from the anode to the holder as electrons. Electrical contact needs to be made between the holder and therefore anode of one unit to the cathode of the adjacent unit. As shown in Fig. 6 an insulator (100) can be positioned between the two units to prevent unwanted electrical contact between the anodes of adjacent units. Electrical contact between the holder of unit and the cathode current collector of the adjacent unit is made by a conducting material (101). This may be a paste or wire or mesh or sheet or combination of these. Fig. 6B shows a conductor (101) in contact with both cathode current collectors (70) but insulated from the holder by an insulator (100). The conductor (101) makes electrical contact with the adjacent cell. As shown in Fig. 16 a ceramic material such as Macor® may be used as the insulator. Other materials include 3 mol% YSZ, Al₂O₃, MgO, and mica (many more insulators are known in the art and can be used here). Fig. 10A and 10B show a silver mesh current collector electronically insulated from the holder by the seal. Silver wire leads bring current to the electrode in this configuration.

While units can be connected in electrical series, they are not limited to then and the stack can have some units in electrical series and others connected in parallel. The flexibility in the unit architecture and the series assemblies can be readily envisioned to lead to combinations that range from a few Watts to 10s of kilowatts, in highly compact power generating devices. Anode gas flow can be in a cascade arrangement to increase stack efficiency. If connected with another unit at connectors there is preferably a space defined on one side by the cathode and on the other side by the cathode of the other coupled unit. The space may communicate via opening and with the cathode for air inlet and exhaust such that the air will be exposed to the cathode. These openings may be exposed to ambient air or have some external supply of an oxidant gas.

Stacked units may be housed in a housing which is preferably defined by an endplate. An air intake may be provided for each cell unit (1) so that each cathode is exposed to the atmosphere or other oxygen source. Alternatively, cathode may be exposed to ambient air. Endplate or housing may have any structure depending on the desired end use, so long as there is communication means for supplying air to the cathodes. This communication means may just be that there is no end plate, housing and the cathode is exposed to ambient air. Air exhaust is provided in the housing for exhaust air.

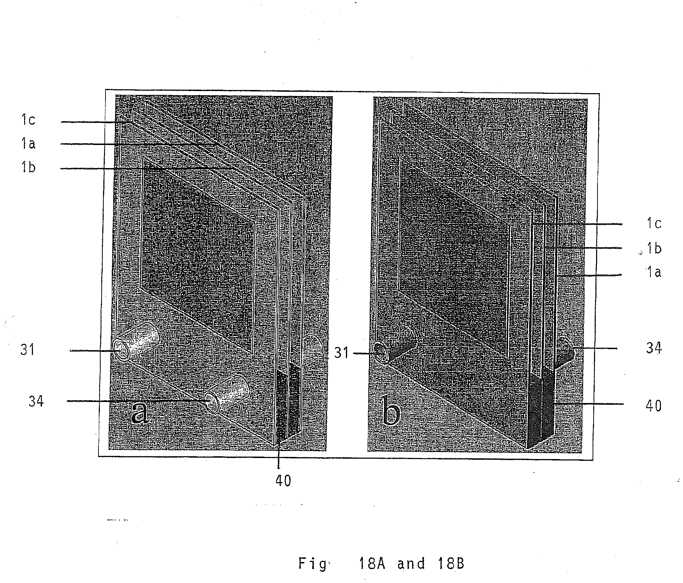

FIG 18A and FIG 18B show a stacked arrangement of cells (1a-1c) separated by insulator (40). Alternate inlet and exhaust arrangements are also shown (compare Figs 5A and 5B). Separate inlets and exhaust may be provided per each unit (1), but the fuel inlet and exhaust may be designed to flow through all of the stacked units.

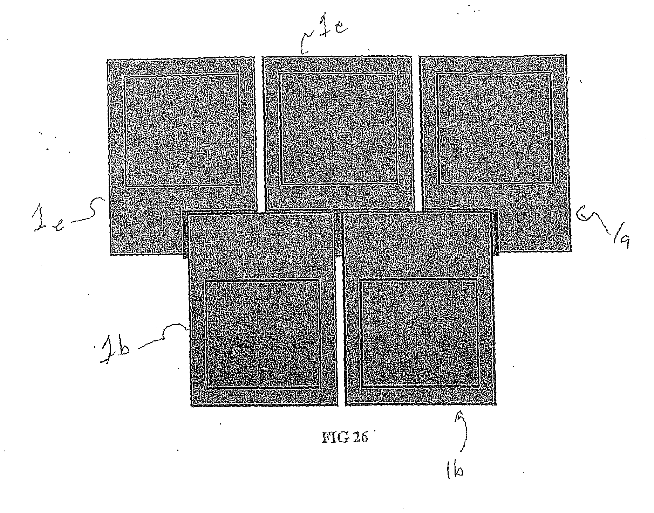

FIGS 16 and 26 shows an alternative "butterfly" arrangement of two or more units (1a, 1b, etc.) separated by an insulator but having communicating fuel inlets and exhaust outlets. Such butterfly arrangements allow the SOFC membranes to be applied after holders (10) are operatively connected, e.g., by brazing which decreases the risk of damaging the SOFC cell during brazing of the individual holders to each other.

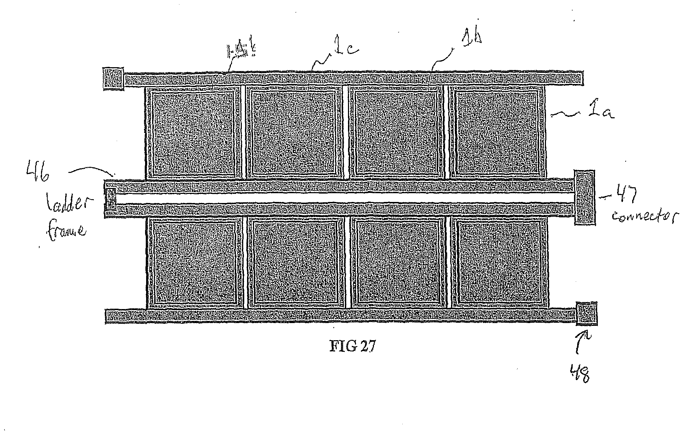

FIG 27 shows an alternative ladder arrangement of a plurality of chipcells (units) according to the invention. The units (1a, 1b, 1c, etc.) are connected to ladder frames 46, with separate ladders being operatively held together with ladder frame connectors 47. A ladder frame end portion on 48 may be provided at an end of a ladder frame, and may be made of electrically conductive or non-conductive material.

The invention contemplates that the structures described herein are to be used as oxygen generators as well as SOFC devices, wherein current or voltage is supplied to the device and oxygen is produced at the anode. Input would comprise air at the cathode.

In a preferred embodiment the devices of this invention are contemplated to have at least 100 mW/cm² at 600-650 °C for a unit cell solid oxide fuel cell and preferably at least 200 mW/cm². The SOFC stack has projected power densities ranging from 0.8 kW/liter (@200mW/cm2) to 1.75 kW/liter (@400mW/cm2) or more, and can be assembled simply by combining the unit cells, without introducing significant additional sealing or manifold difficulties. The invention contemplates that this performance will be achieved with fuel/oxidant combinations of (H₂, H₂O)/air and reformed hydrocarbon/air, but any fuels may be used. The present invention contemplates that the fuel cells disclosed herein may also be run on fuels besides hydrogen gas, such as alcohols, propane, butane, methane, octane, and diesel and this operation is well known to those with skill in the art. Anode gas recycle is also contemplated.

The dimensions of the cells are determined in part by the need to have efficient edge current-collection. This is in turn determined by the in-plane conductivity of the electrodes, by non-active edge areas, etc. While not being limited to any particular dimension, calculations based on these factors and on the known electronic resistance of the various materials involved in the electrodes indicate that an approximate maximum length for edge current collection, with a potential drop ofless than 50 mV, is between 4 and 5 cm. The projected performance of the fuel cell will therefore be sensitive to a number of geometrical factors as well as to the intrinsic power per unit electrode area.

Insulating materials may be used in accordance with the present invention to insulate chipcell units from each other and/or from a housing, or to insulate between the cell membrane and front or back wall of a holder and to adhere the cell thereto. These insulating materials are typically ceramics, but this is not limiting. Any technique may be used to affix the cell, when used, to the holder, including brazing, adhesives and compression seals.

Brazing is the process of joining two materials by briefly melting then solidifying an alloy. Brazing is similar to soldering except the alloys used have a melting point or melting range above 450°C. Common alloys used for brazing are based on Cu, Ni, Ag, and/or Au. Brazing to ceramics is more difficult than brazing metals because the molten alloys do not wet oxides very well. Commercially available brazing alloys for ceramics or metal ceramic joints often include active elements that react with the oxide surface and promote wetting. For example, Active Brazing Alloys (ABA)® (registered trademark of Wesgo® Metals) contain additions of elements such as titanium that promotes wetting on the ceramic surface. Copper based brazes, such as Copper-ABA®, and silver-copper based brazes such as Silver-ABA®, Ticusil®, Cusil-ABA® can be used for bonding and sealing the membrane in the frame as well as for bonding and sealing the insulating spacer to the frame. Gold, nickel-chromium based brazes can also be used in these applications.

Ceramic adhesives are used for bonding and sealing ceramics, metals, quartz, and composite materials. They often contain silicates or phosphates that, when heated, form strong bonds to the metals or ceramics. Some adhesives also contain ceramic or metal particles and fibers to improve strength or improve the thermal expansion match between materials.

An example of an electrically conductive adhesive is Aremco Pyro-Duct™ 597-A (Aremco Products, Inc, Valley Cottage, NY 1098). It is a silver-filled paste suitable for sealing, bonding, and forming the electrical contact between the cell and holder. Nonlimiting examples of commercially available ceramic adhesives that exhibit high thermal and electrical resistance, are Aremco Ceramabond 516, 552, 571, and 671.

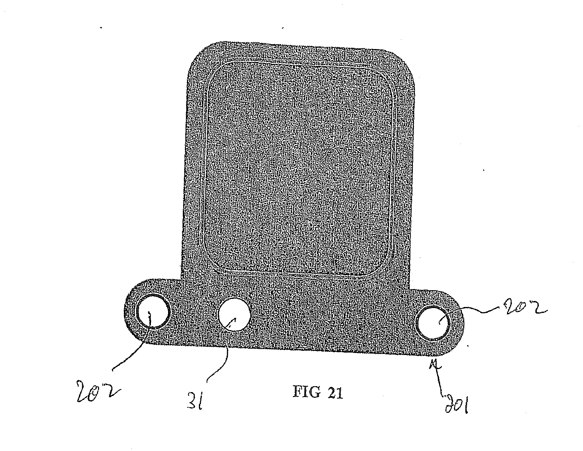

In addition to the brazes and adhesives described above it is also possible to seal one chipcell unit to another with a compressive seal or a combination of compression and adhesive or braze. Compression can be accomplished by simply bolting the structure together. Fig. 21 shows the same basic chipcell design with the addition of tabs on the lower portion that have holes for bolting the structure together. The bolts are preferably made from a ferritic steel alloy and are insulated from the metal portion of the chipcell with Macor® or mica or glass sleeves. This allows for compression on the lower portion of the chipcell where cell-to-cell connection is made.

The chipcell and stack design disclosed herein allows for distributing the reactant gas in series or in parallel or both with the cells. In other words, reactant gas enters the anode chamber of one cell, exits the cell, then enters the next cell in series. This type of series or cascade gas flow arrangement is know to improve the efficiency of stacks when compared to parallel gas flow such as occurs in typical planar stack designs. Preferably, at least four units have gas flow in series. Because of the versatility of the holder and stack it is envisioned that there can be many series/parallel designs. A portion of the anode gas may be recycled to improve efficiency.

### EXAMPLES OF PREFERRED EMBODIMENTS

### Example 1

A chipcell holder was manufactured from 430 stainless steel sheet (McMaster Carr) with a thickness of 0.028 inch (0.711 cm) machined to yield a holder such as described herein with a dimension of 2.8cm by 3.6cm by 0.21 cm thick. The size of the square frames is 2 cm by 2cm and is approximately 0.46cm thick. The holder consists of three parts, namely the front wall, the spacer, and the back wall or end piece as shown in detail Fig. 4A. After the sheet was cut and milled to form the designed parts, holes on the front piece were provided and 316 stainless tubes (McMaster Carr; 1/8 inch OD) were inserted into them and welded to form the gas inlet and outlet. Then three parts are aligned as shown and welded along edges to form the cell holder. Fig. 4B shows the holder parts made out of the 430 SS sheets. After connection of the 316SS tubes to the front piece, these 3 components are welded into a chipcell holder. Others were made with thicknesses of 0.457 mm and 0.15 mm. The holders can be scaled up in size, e.g., to 5.8 cm x 6.9 cm and 0.21 cm thick for housing larger membranes, e.g., 5 cm x 5 cm, as shown for comparison in Fig. 5.

Prior to mounting SOFC membranes to the holder, the holder was annealed at 750°C for 2h with a temperature increasing/decreasing rate of 3°C/min. For this experiment, a commercial SOFC membrane (EC Type ASC2InDEC) was cut into a square of 1.995cm by 1.995cm and the four corners were rounded with sand paper. The square SOFC membranes were rinsed in acetone three times, and the cathode side was masked into a square of 1.5cm by 1.5cm.

. A thin layer of silver conductive paste (Alfa Aesar) was then applied on the masked cathode square and dried up under a heating lamp (∼60°C), and an Ag paste was applied to the frame structures on both sides of the holder to adhere the SOFC membranes onto the respective windows in the back and front walls. The entire unit structure was then dried under the heating lamp and heated up to 700°C for 1h using temperature changing rate of 5°C/mm.

Silver mesh (Alfa Aesar) was then placed on top of the thin Ag layer and silver paste was applied to cover the Silver mesh. Aremco 552 VFG ceramic adhesive was drawn into a 1 ml syringe and applied to cover any gap between the holder and the mounted SOFC membranes and to bond the silver mesh to the cell and holder. The adhesive was then cured using the temperature profile of 2°C/min to 93°C, dwell 2h; 2°C/min to 260°C, dwell 2h; 2°C/min to 371°C, dwell 2h; 2°C/min and then cooled to room temperature. A photograph of the assembled chipcell is shown in Fig.10A.

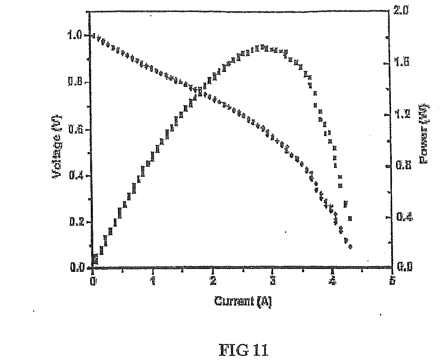

Electrochemical performance was determined by spot welding Ag wires onto the silver mesh, as illustrated in Fig. 10B, and the resultant unit was placed into a furnace. The temperature was raised from room temperature to the test temperature with a rate of 2°C/min. A 97% H₂+3%H₂O mixture was fed from one of the 316 SS tubes to the anode chamber, and the cathodes were left exposed to open air. Unit performance was measured at 720°C and is shown in Fig. 11. The OCV was determined to be∼1.02 V, and the unit was able to output ∼1.8 W of power. Since the active area of the cathodes is 2 x 1.5cmx1.5cm = 4.5cm², the corresponding peak power density is ∼0.4 W/cm².

Note that the holder is 2.8 cm x3.6 cm x 0.21cm, the volumetric power density (VPD) is straightforwardly calculated as 0.85 kW/L. Many factors collectively determine the VPD, among them include the size of holders and the SOFC membranes. Trimming down the width of the window frame (the space between the edge of the membrane and the outer edge of the holder) will increase the VPD. The VPD increases to 1.3 kW/L when the window frame narrows down to 1mm, a value that is reasonable for manufacture. Understandably another factor to determine the VPD is the size of chipcell as the holder occupies a relatively significant portion of space in the case of small chipcell. Thus if the window frame width is held at 1mm, the VPD increases with the size of membranes and reaches ∼2.5 kW/L for the large chipcell (5cm x 5cm cell area with 4.75 cm x 4.75 cm cathode area). The VPD of chipcell stacks will be smaller than these values and also strongly relies on the space between the chipcells. For instance, a 0.5mm separation between the above-discussed large chipcells will decrease the VPD to 2kW/L that is useful for practical applications.

### Controlled heating and cooling

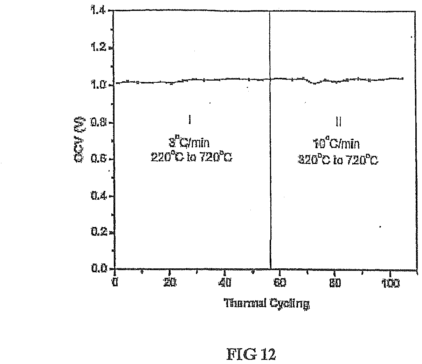

Fig. 12 displays the variation of OCV of the unit subjected to thermal cycling at different controlled heating and cooling rates. The initial OCV at 720°C was∼1.02V, indicating a good quality of the sealant, and remained at ∼1.03V after 57 times cycling between 220°C and 720°C at a rate of 3°C/min. The results shows that OCV did not degrade even when the temperature change rate was increased to 10°C/min between 320°C and 720°C for 48 times.

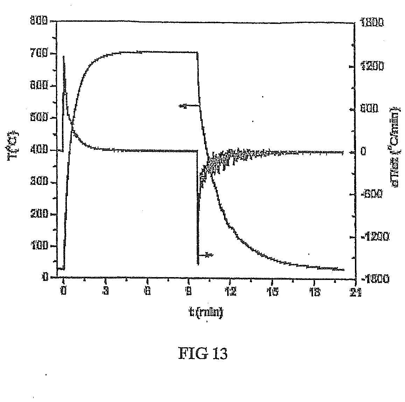

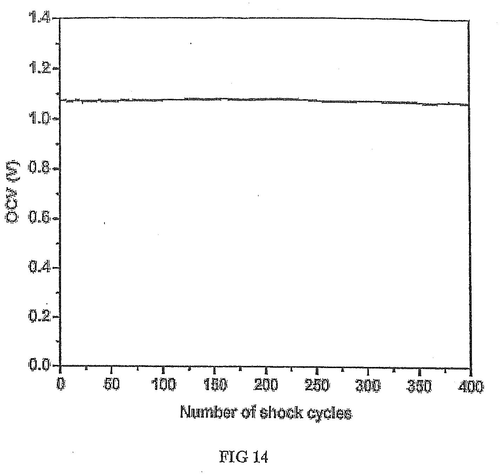

To examine further the stability of the chipcell during rapid thermal cycling, a second unit made in accordance with the unit described above subjected to thermal-shock treatment that resulted from the direct removal of the unit from hot furnace to ambient temperature and vice versa. It allows fast insertion or removal of the chipcell from the furnace held at high temperature. The temperature change profile during the thermal shock procedure was recorded and displayed in Fig. 13, with the thermocouple affixed to the chipcell. Initial heating rates are over 1000°C/min. Fig. 13 shows that the chipcell sustained a heating from 29°C to 700°C in 3.6 mins and it takes -3.8 mins to cool from 708°C to 100°C. The OCV measured at 708°C is summarized in Fig. 14, and it is 1.07V initially and maintains values over 1.06V even after 400 times thermal shock cycles.

### 2-cell butterfly stack

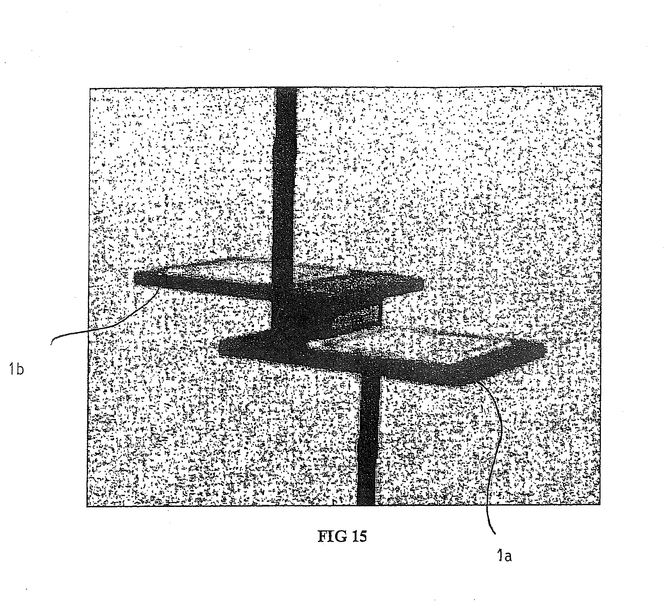

Single chipcell holders were made following the above procedure except that only one of two holes was welded with a stainless steel tube. Macor™ (McMaster Carr, 0.125" thick) was selected as the spacer to connect the chipcells, and was machined into 9mm*11mm blocks and a 3/16" hole was bored through the center of the blocks. TiCuSil (68.8Ag-28.7Cu-4.5Ti;Wesgo) active brazing alloy (ABA) was tape calendared into 0.005" thick and then cut into 11mm*13mm strips where a hole of 1/8" was also bored through their center. Then the first chipcell holder, ABA, MACOR, ABA, the second chipcell holder were sequentially stacked up in such a way that the centers of holes were well aligned. The whole structure was then stabilized with a clamp, and transferred into a brazing furnace with a typical vacuum of 1.5*10⁻⁵ mmHg. The furnace was heated up to 400°C, after that the ramping rate was set as 10°C/min and dwelled at 880°C for 10 minutes before cooling down to room temperature. The SOFC membranes were attached and sealed onto the manifold, following the identical procedures elaborated in above paragraphs, to assemble the 2-unit butterfly stack as shown in Fig. 15.

### Connection of chipcells into stacks

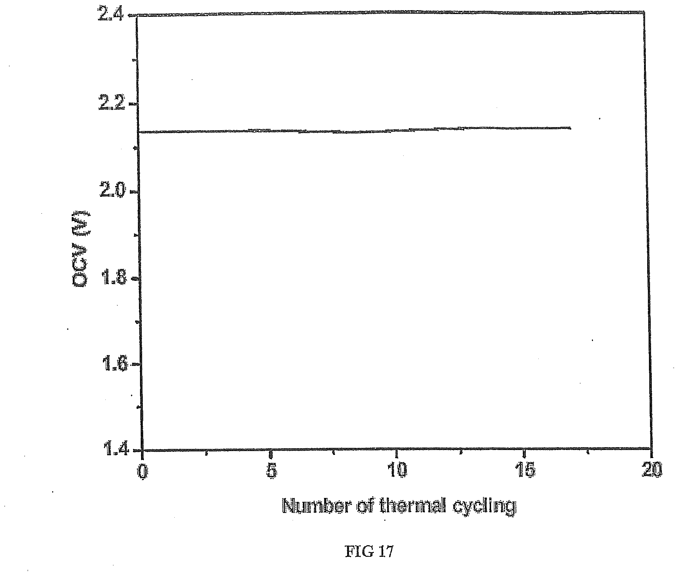

Since there are a variety of ways to buildup stacks based on the chipcell design, to demonstrate stack concepts two chipcells were joined together via a block of MACOR using brazing techniques to form the 2-cell butterfly stack displayed in Fig. 15. Fig. 16 shows a SEM image of the joint of MACOR-brazing alloy-stainless steel, displaying good bonding between brazing alloy and MACOR/stainless steel. In fact high magnification observation (not shown here) reveals dense texture along the brazed interfaces, which suggests the gastight connection between chipcells is accomplished. The constructed stack was tested electrochemically at 700°C, and the stack OCV is 2.14V that perfectly agrees with the single chipcell OCV value of 1.07V. Obviously, both microscopic and electrochemical testing results indicate that chipcells are successfully jointed together and form a 2-cell chipcell stack. The stack was also thermally cycled between 200°C and 700°C with a temperature changing rate of 10°C/min, and the variation of stack OCV with cycling is plotted in Fig. 17. It is found that OCV stabilizes around 2.14V, which implies a high quality seal on the membranes and connection between the holders.

The results show that the unit SOFC according to the invention is capable of producing a peak power density of 0.4W/cm² or more at 720°C, and its volumetric power densities is ∼0.85kW/L that can be raised up without significant difficulty by optimizing holders and loaded SOFC membranes.

The assembled unit according to the invention is extremely tolerant to rapid thermal cycling, and shows no signs of gas leakage after 400 times thermal shock treatment in which the unit bears temperature change rates of over 1000°C/min. The unit can be heated up to 700°C in less than 3.6 minutes.

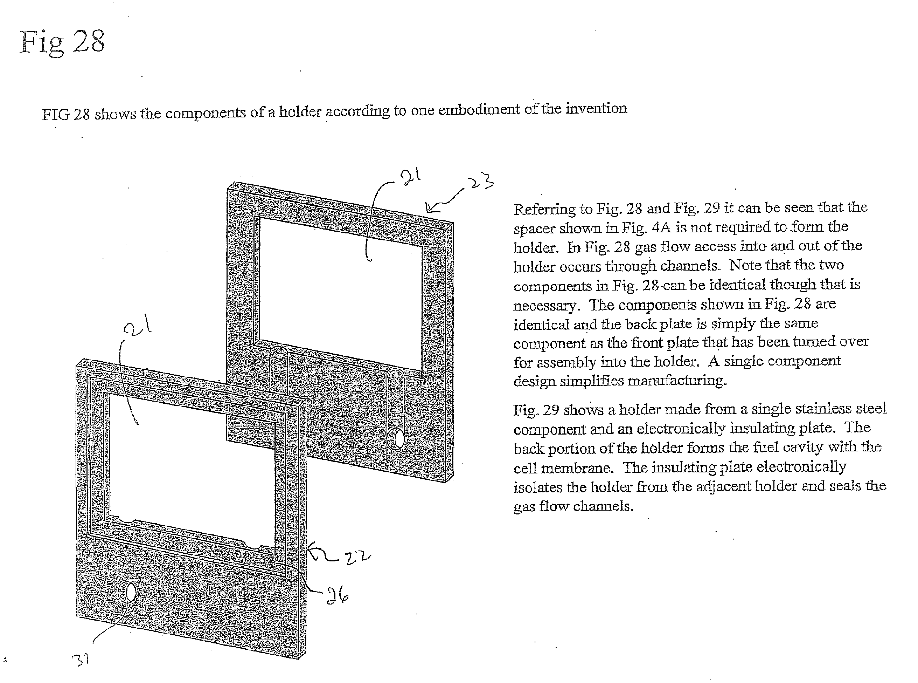

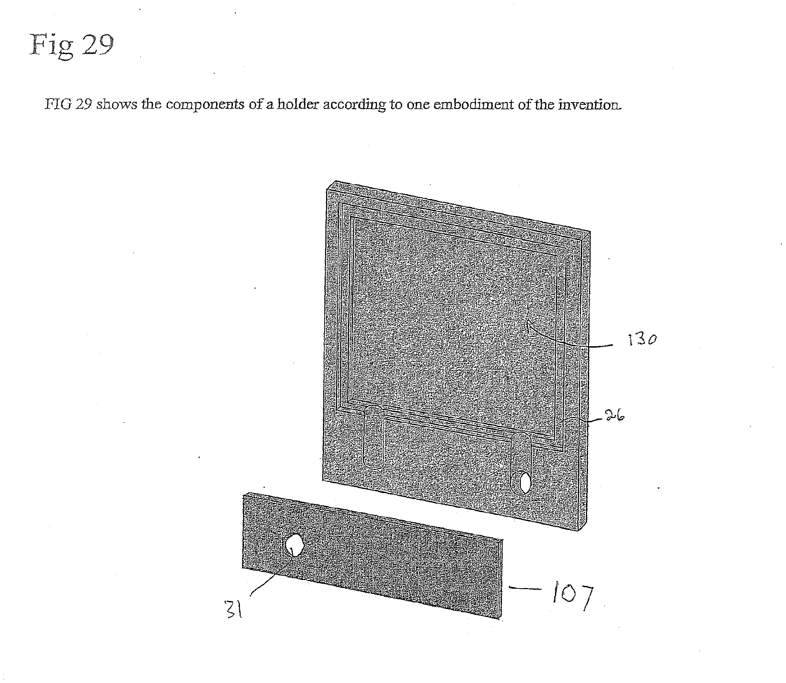

Referring to Figs. 28 and Fig. 29 it can be seen that the spacer shown in Fig. 4A is not required to form the holder, yielding two-part and single (unitary) construction. In Fig. 28 gas flow access into and out of the holder occurs through channels. Note that the two components in Fig. 28 can be identical though that is not necessary. The components shown in Fig. 28 are identical and the back plate is simply the same component as the front plate that has been turned over for assembly into the holder. A single component design simplifies manufacturing.

Fig. 28 shows window 21 and cell membrane receiving region 26 which is recessed in plate 22. The walls may be made of any suitable materials or combinations thereof, e.g., electrically conductive or non-conductive materials.

Fig. 29 shows a holder made from a single component and an electronically insulating plate 107. The solid back portion of the holder 130 of this embodiment forms the fuel cavity with the cell membrane thus there is no window. Cell receiving region 26 is also provided. The insulating plate electronically isolates the holder from the adjacent holder when stacked and seals the gas flow channels.

All references, patents and published patent applications disclosed herein are expressly incorporated by reference in their entireties for all purposes.

The invention is further defined by the following items:
1. A cell stack assembly comprising:
   a plurality of planar cell units, wherein each of the cell units comprises a cell holder and at least one cell, wherein the cell and cell holder are electrically connected;
   wherein the at least one cell comprises an anode, a cathode, and an electrolyte; and
   wherein said plurality of cell units are connected at a portion of a periphery of the cell holder of each cell unit.
2. The cell stack assembly according to item 1, wherein each cell comprises a cell membrane.
3. The cell stack assembly according to item 1, wherein the holder comprises an opening for mounting the cell membrane, an electrical contacting portion adjacent to the anode, an electrically insulating portion to electronically isolate the cathode, and a gas outlet and a gas inlet, both adjacent to the opening.
4. The cell stack assembly according to item 1, wherein the holder comprises a front wall plate, a back wall plate, and a spacer positioned therebetween.
5. The cell stack assembly of item 1, wherein at least a portion of the holder comprises an electrically conductive material which is in electric contact with the anode.
6. The cell stack assembly of item 1, wherein the holder comprises stainless steel, a ceramic, an alloy or a composite.
7. The cell stack assembly of item 1, wherein the plurality of cell units are aligned in a butterfly arrangement.
8. The cell stack assembly of item 1, wherein the plurality of cell units are positioned in a housing.
9. The cell stack assembly according to item 1, wherein the at least one cell comprises a SOFC membrane.
10. The cell stack assembly of item 1, wherein the cell units are separated by an insulating material.
11. The cell stack assembly of item 1, wherein the holder comprises stainless steel.
12. The cell stack assembly of item 1, wherein said plurality of cell units are electrically or mechanically connected at a portion of a periphery of the cell holder of each cell unit.
13. A holder for a cell stack assembly comprising:
   an opening for mounting a cell;
   a first electrical contacting portion for contacting an anode of the cell;
   a second electrical contacting portion for contacting a cathode of an adjacent cell;
   an electrical insulating portion to preclude electrical contact with an adjacent cell holder; and
   a gas manifold positioned at a periphery of the holder.
14. The holder of item 13, wherein at least a portion of the holder comprises stainless steel.
15. The holder of item 13, wherein the holder comprises stainless steel, a ceramic, a metal alloy or a composite.
16. The holder of item 13, wherein the holder comprises an electrically insulating portion to electrically isolate a cathode.
17. The holder of item 13, wherein the cell is a membrane.
18. The holder of item 13, wherein the holder comprises a metal alloy.
19. A cell unit comprising the holder of item 13 and an SOFC membrane mounted to a periphery of the opening.
20. The cell unit of item 19, wherein said holder comprises stainless steel.
21. The cell unit of item 19, wherein the SOFC membrane is affixed to the holder with an adhesive.

## Claims

1. An electrochemical cell unit, comprising an electrochemical cell holder and at least one electrochemical cell,
wherein the at least one electrochemical cell comprises an anode, a cathode and an electrolyte,
wherein the electrochemical cell holder includes a front wall plate, a back wall plate, and an electrically conductive portion which is in electrical contact with an electrode of the at least one electrochemical cell, and wherein at least one of the front wall plate and the back wall plate has an opening for mounting the at least one electrochemical cell, a gas outlet or/and a gas inlet, and optionally a receiving region adjacent the opening for affixing the at least one electrochemical cell.

2. The electrochemical cell unit according to claim 1, comprising an electrochemical cell holder and at least one electrochemical cell,
wherein the at least one electrochemical cell comprises an anode, a cathode and an electrolyte,
wherein the electrochemical cell holder includes a front wall plate, a back wall plate, a spacer positioned between the front wall plate and the back wall plate, and an electrically conductive portion which is in electrical contact with the anode of the at least one electrochemical cell, and wherein at least one of the front wall plate and the back wall plate has an opening for mounting the at least one electrochemical cell, a gas outlet or/and a gas inlet for providing fuel to the anode of the at least one electrochemical cell, and optionally a receiving region adjacent the opening for affixing the at least one electrochemical cell.

3. The electrochemical cell unit according to claim 1, comprising an electrochemical cell holder and at least two electrochemical cells,
wherein the at least two electrochemical cells comprise an anode, a cathode and an electrolyte,
wherein the electrochemical cell holder includes a front wall plate with at least one opening for mounting an electrochemical cell, a back wall plate with at least one opening for mounting an electrochemical cell, an electrically conductive portion which is in electrical contact with inner electrodes, and a gas outlet or/and gas inlet adjacent to the opening, and wherein the inner electrode of the electrochemical cell mounted in the front wall plate and the inner electrode of the electrochemical cell mounted in the back wall plate are spaced apart and facing inward toward one another.

4. The electrochemical cell unit according to claim 3,
**characterized in that**
the inner electrode is an anode.

5. The electrochemical cell unit according to claim 4,
**characterized in that**
the anodes are spaced apart and form the anode chamber of the electrochemical cell unit.

6. The electrochemical cell unit according to any one of claims 1 to 5, **characterized in that**
it comprises a first electrochemical cell and a second electrochemical cell, wherein the front wall plate has an opening for mounting the first electrochemical cell and optionally a receiving region adjacent the opening for affixing the first electrochemical cell by a sealant,
wherein the back wall plate has an opening for mounting the second electrochemical cell and optionally a receiving region adjacent the opening for affixing the second electrochemical cell by a sealant,
wherein the front wall plate or the back wall plate has a gas outlet, wherein the front wall plate or the back wall plate has a gas inlet,
and wherein the spacer forms a fuel cavity between the anode of the first electrochemical cell and the anode of the second electrochemical cell.

7. The electrochemical cell unit according to any one of claims 1 to 6,
**characterized in that**
the electrochemical cell holder further comprises flow directing means to direct the flow of fuel in the anode chamber.

8. The electrochemical cell unit according to any one of claims 1 to 7,
**characterized in that**
the electrochemical cell holder further comprises an electrically insulating portion to electronically isolate the outer electrode from the electrochemical cell holder.

9. The electrochemical cell unit according to any one of claims 1 to 8,
**characterized in that**
the electrochemical cells are mounted into the holder by a conductive or insulating seal.

10. The electrochemical cell unit according to any one of claims 1 to 9,
**characterized in that**
the electrochemical cell holder comprises stainless steel, ceramics, alloys or composites, in particular ferritic stainless steel or nickel based alloys.

11. The electrochemical cell unit according to any one of claims 1 to 10,
**characterized in that**
the electrochemical cell further comprises metal or cermet support structures.

12. An electrochemical cell stack assembly, comprising a plurality of electrochemical cell units according to any one of claims 1 to 11.

13. The electrochemical cell stack assembly according to claim 12,
**characterized in that**
the plurality of electrochemical cell units are connected at a portion of the periphery of the electrochemical cell holder of each electrochemical cell unit, wherein the electrochemical cell stack assembly further comprises an electrical insulator positioned between two adjacent electrochemical cell units to prevent electrical contact between inner electrodes of adjacent electrochemical cell units.

14. The electrochemical cell stack assembly according to claim 12, comprising a plurality of electrochemical cell units comprising an electrochemical cell holder and at least one electrochemical cell,
wherein the at least one electrochemical cell comprises an anode, a cathode, an electrolyte and a metal support structure,
wherein the electrochemical cell holder includes a back wall plate with an electrochemical cell receiving region, an electrically conductive portion which is in electrical contact with inner electrode, and a gas outlet or/and gas inlet adjacent to the electrochemical cell receiving region,
wherein the plurality of electrochemical cell units are connected at a portion of the periphery of the electrochemical cell holder of each electrochemical cell unit, and wherein an electronic insulator is positioned between two electrochemical cell units to prevent electrical contact between inner electrodes of adjacent electrochemical cell units.

15. The electrochemical cell stack assembly according to any one of claims 12 to 14,
**characterized in that**
the anode gas flow arrangement comprises cascaded gas flow.

16. The electrochemical cell stack assembly according to any one of claims 12 to 15,
**characterized in that**
the electrochemical cell units are connected in electrical series or parallel.

17. The electrochemical cell stack assembly according to any one of claims 12 to 16,
**characterized in that**
the electrochemical cell units are sealed to one another with a compressive seal, an adhesive, a braze, or a combination of compression, adhesive and braze.

18. The electrochemical cell stack assembly according to any one of claims 14 to 17,
**characterized in that**
the metal support structure for the electrochemical cell comprises ferritic stainless steel.
